# EUROPÄISCHE PATENTANMELDUNG

(11) **EP 1 628 305 A1**
(43) Veröffentlichungstag der Anmeldung: **22.02.2006**
(21) Anmeldenummer: 05015682.7
(22) Anmeldetag: 19.07.2005
(51) Int. Cl.: G11B 27/034, G11B 27/34, G11B 27/00

(54) **Verfahren zum Schneiden eines digitalen Films unter Verwendung einer elektronischen Datenverarbeitungsvorrichtung**

(30) Priorität: 20.08.2004 DE 102004040541
(71) Anmelder: Fujitsu Siemens Computers GmbH, 80807 München (DE)
(72) Erfinder: Kleine, Joachim, 86159 Augsburg (DE)
(74) Vertreter: Epping - Hermann - Fischer

(57) **Zusammenfassung**

Die Erfindung betrifft ein Verfahren zum Schneiden eines digitalen Films mit den Schritten: Setzen einer ersten Schnittmarkierung, Setzen einer zweiten Schnittmarkierung und Löschen eines Filmabschnitts zwischen einer ersten und der zweiten Schnittmarkierung. Das erfindungsgemäße Verfahren ist dadurch gekennzeichnet, dass ausgehend von einem Wiedergabemodus (21) und ausgelöst durch ein erstes Betätigen einer Taste (13, 14) die folgenden Schritten automatisch ausgeführt werden: Setzen einer Schnittmarkierung (23), Ausführen eines Rücksprungs (24) und Fortsetzen des Wiedergabemodus (21) an der durch den Rücksprung erreichten Stelle des Films.

Außerdem betrifft die Erfindung eine Schnittvorrichtung mit einer Datenverarbeitungsvorrichtung (1) und einer Fernbedienung (2), wobei die Datenverarbeitungsvorrichtung (1) oder die Fernbedienung (2) zur Durchführung des erfindungsgemäßen Verfahrens eingerichtet ist und zum Setzen der Schnittmarkierungen Tasten (13, 14) der Fernbedienung (2) verwendet werden.

## Beschreibung

Die Erfindung betrifft ein Verfahren zum Schneiden eines digitalen Films unter Verwendung einer elektronischen Datenverarbeitungsvorrichtung mit den Schritten:
- Setzen einer ersten Schnittmarkierung,
- Setzen einer zweiten Schnittmarkierung und
- Löschen eines Filmabschnitts zwischen der ersten und der zweiten Schnittmarkierung.

Außerdem betrifft die Erfindung eine Schnittvorrichtung zum Schneiden eines digitalen Films mit einer Datenverarbeitungsvorrichtung und einer Fernbedienung.

Filme liegen immer häufiger in digitaler Form vor. Die Verarbeitung von Filmen in digitaler Form ist dadurch möglich geworden, dass digitale Speichermedien mit einer großen Aufnahmekapazität zu verhältnismäßig günstigen Preisen verfügbar sind. Außerdem sind Mikroprozessoren verfügbar, deren Leistungsfähigkeit zur Verarbeitung großer Datenmengen, wie sie bei Filmen auftreten, in Echtzeit ausreicht.

Bei in digitaler Form vorliegenden Filmen besteht, wie auch bei in analoger Form vorliegenden Filmen, das Problem, dass oft Filmabschnitte aufgezeichnet werden, die eigentlich unerwünscht sind. Bei privaten Videoaufnahmen beispielsweise sind oft nur wenige Szenen dazu geeignet, für später aufgehoben zu werden. Bei der Aufzeichnung von im Fernsehen ausgestrahlten Filmen ist beispielsweise die automatisch mit aufgezeichnete Werbung unerwünscht. Bei einer timergesteuerten automatischen Aufzeichnung kann es zudem vorkommen, dass die Aufzeichnung zu früh, das heißt vor Beginn des Films, startet und eventuell erst mit einem zeitlichen Abstand zum Ende des Films endet. In all diesen Fällen ist es erstrebenswert, eine Möglichkeit zu besitzen, die unerwünschten Filmabschnitte herauszuschneiden. Während dies beispielsweise bei analogen Videocassetten nur sehr schwer möglich ist und das Schneiden darüber hinaus mit Qualitätseinbußen verbunden ist, lassen sich in digitaler Form vorliegende Filme ohne Qualitätsverluste schneiden.

Schnittsysteme für digitale Filme sind häufig als Computerprogramme implementiert, sodass zur Festlegung der herauszuschneidenden Filmabschnitte die von Computern gewohnte, komfortable Bedienung mit Maus und Tastatur einsetzbar ist.

Digitale Aufzeichnungsgeräte, die beispielsweise eine Festplatte als Speichermedium benutzen, halten zunehmend Einzug in die Wohnzimmer der Benutzer und werden wie ein Videorecorder oder Satellitenreceiver in der Nähe des Fernsehgeräts aufgestellt. Sie besitzen häufig auch ein Schnittfunktion. Solche Geräte besitzen weder eine Maus noch eine Tastatur, sondern werden über eine Fernbedienung angesteuert. Gegenüber herkömmlichen Computer-basierten Schnittsystemen stehen somit wesentlich weniger Bedienelemente zur Verfügung.

Bei der Bedienung mittels einer Fernbedienung stellt sich das genaue Setzen von Schnittmarkierungen innerhalb eines zu schneidenden Films als Problem heraus. Typischerweise wird eine Schnittmarkierung durch das Drücken einer Taste gesetzt. Problematisch ist hierbei, dass zwischen dem Erkennen der Stelle, an der geschnitten werden soll, und dem Drücken der Taste eine gewisse Zeit vergeht. Im Ergebnis werden die Schnittmarken immer zu spät, das heißt an der falschen Stelle gesetzt.

Aufgabe der Erfindung ist es, ein Verfahren zum Schneiden eines digitalen Films anzugeben, bei dem das Setzen einer exakten Schnittmarkierung vereinfacht ist. Außerdem soll eine entsprechende Schnittvorrichtung angegeben werden.

Die Aufgabe wird erfindungsgemäß durch ein Verfahren der eingangs genannten Art gelöst, das dadurch gekennzeichnet ist, dass ausgehend von einem Wiedergabemodus und ausgelöst durch ein erstes Betätigen einer Taste die folgenden Schritten automatisch ausgeführt werden:
a) Setzen einer Schnittmarkierung,
b) Ausführen eines Rücksprungs und
c) Fortsetzen des Wiedergabemodus an der durch den Rücksprung erreichten Stelle des Films.

Bezüglich der Schnittvorrichtung wird die Aufgabe durch eine Schnittvorrichtung der eingangs genannten Art gelöst, die dadurch gekennzeichnet ist, dass die Datenverarbeitungsvorrichtung zur Durchführung des Verfahrens nach einem der Ansprüche 1 bis 6 eingerichtet ist und die Taste eine Taste der Fernbedienung ist.

Der Vorteil des erfindungsgemäßen Verfahrens und der erfindungsgemäßen Schnittvorrichtung bestehen darin, dass ein exaktes Setzen der Schnittmarkierungen möglich ist, ohne dass dafür eine Vielzahl von Tasten, Eingabehilfen wie eine Maus oder Ähnliches erforderlich ist. Es genügt eine einzige Taste auf der Fernbedienung, um die Schnittmarkierung exakt an der Position zu setzen, an der sie gewünscht ist. Durch das automatische Ausführen des Rücksprungs und des Fortsetzens des Wiedergabemodus kann sich ein Benutzer ganz auf die Positionierung der Schnittmarkierung konzentrieren und wird nicht durch das Suchen der richtigen Tasten zum Rückspulen und Schalten in den Wiedergabemodus abgelenkt. Dies ist insbesondere dann ein Vorteil, wenn die Schnittvorrichtung bzw. das Verfahren in Verbindung mit einem Fernseher eingesetzt wird, der oftmals im Wohnzimmer unter ungünstigen Lichtbedingungen benutzt wird.

Dadurch, dass das erfindungsgemäße Verfahren wiederholt ausführbar ist, kann eine sukzessive Annäherung an den gewünschten Schnittpunkt erreicht werden.

Besonders vorteilhaft ist, wenn nach einem Rücksprung der Wiedergabemodus in einer verlangsamten Variante ausgeführt wird. Auf diese Weise wird ein zuverlässiges Setzen einer zeitlich exakt positionierten Schnittmarkierung weiter vereinfacht.

Günstig ist es, wenn für das Setzen der ersten und der zweiten Schnittmarkierung unterschiedliche Tasten verwendet werden. Bei Verwendung geeigneter Farbmarkierungen auf den Tasten ist für einen Benutzer eine größere Sicherheit gegeben, dass nicht der falsche Filmabschnitt herausgeschnitten wird.

Besonders günstig ist zudem, wenn auf einem angeschlossenen Anzeigegerät angezeigt wird, ob der aktuell laufende Filmabschnitt vor der ersten, nach der zweiten oder zwischen den beiden Schnittmarkierungen liegt.

Weitere vorteilhafte Ausgestaltungen der Erfindung sind in den Unteransprüchen angegeben.

Die Erfindung wird nachfolgend anhand von Ausführungsbeispielen näher erläutert. Es zeigen:
Figur 1 eine Schnittvorrichtung zur Durchführung des erfindungsgemäßen Verfahrens,
Figur 2 ein Ablaufdiagramm einer ersten Ausführungsform eines erfindungsgemäßen Verfahrens,
Figur 3 ein Ablaufdiagramm einer zweiten Ausführungsform des erfindungsgemäßen Verfahrens und

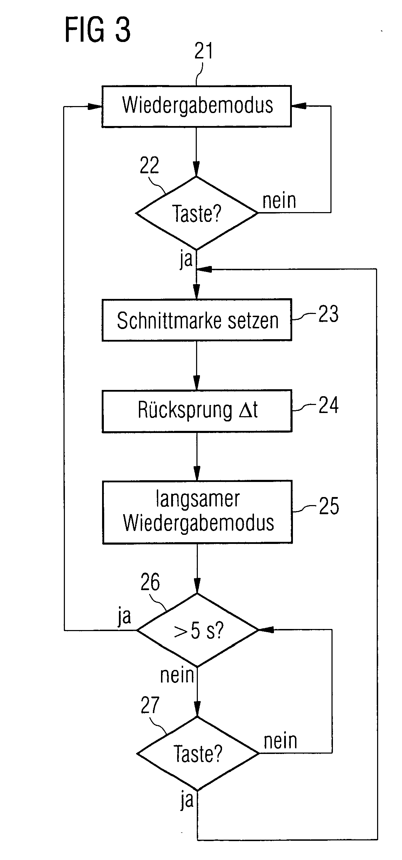

Figur 3 ein Zeitdiagramm zur Veranschaulichung der zeitlichen Abläufe bei Durchführung der erfindungsgemäßen Verfahren.

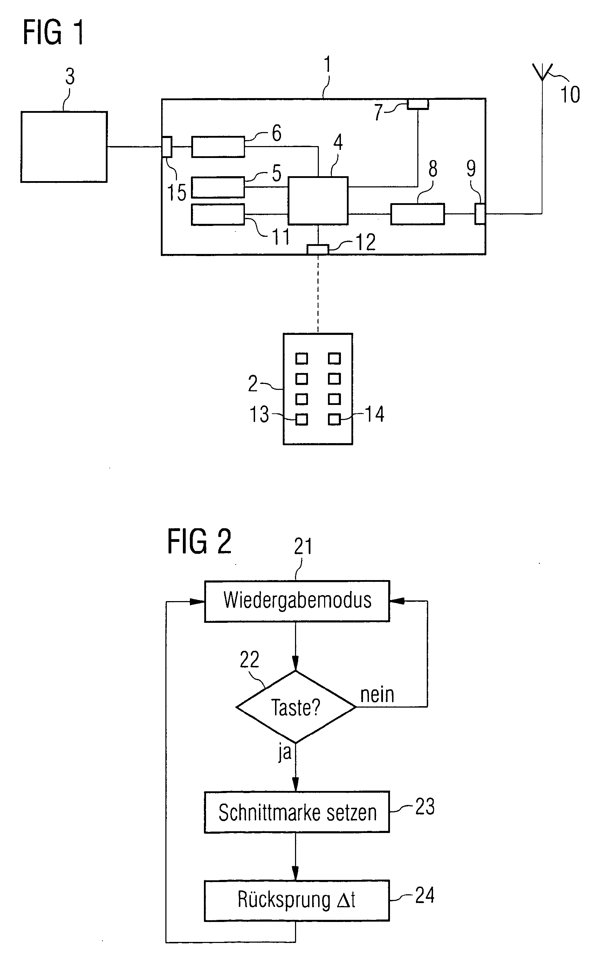

Figur 1 zeigt eine Schnittvorrichtung, aufweisend eine Datenverarbeitungsvorrichtung 1 und eine Fernbedienung 2. Außerdem ist in der Anordnung von Figur 1 ein Anzeigegerät 3 an die Schnittvorrichtung angeschlossen.

Die Datenverarbeitungsvorrichtung 1 weist eine Recheneinheit 4 auf, die zur Verarbeitung der anfallenden Daten vorgesehen ist. Die Recheneinheit 4 ist mit einem Festplattenspeicher 5 verbunden. Diese ist zur Speicherung digitaler Filme vorgesehen. Außerdem ist dort die für den Betrieb erforderliche Anwendungssoftware und ein Betriebssystem gespeichert. Weiterhin ist eine Anzeigesteuereinheit 6 vorgesehen, die zur Ansteuerung des Anzeigegeräts 3 ausgebildet ist. Die Anzeigesteuereinheit 6 ist vorzugsweise so ausgebildet, dass sie Anzeigegeräte verschiedenen Typs ansteuern kann, beispielsweise einen Computermonitor oder ein Fernsehgerät. Zum Anschluss der Anzeigegeräte ist eine geeignete Schnittstelle 15 vorgesehen.

Als Datenquellen für die digitalen Filme sind mehrere Möglichkeiten vorgesehen. Einerseits besteht die Möglichkeit, Fernsehprogramme über eine Antenne von einem terrestrischen Sender, über einen Satellitenempfänger oder einen Kabelanschluss zu empfangen. Dazu ist eine HF-Verarbeitungseinheit 8 vorgesehen. An eine dieser zugeordneten Schnittstelle 9 ist in der Figur 1 exemplarisch eine Antenne 10 angeschlossen. Daneben besteht die Möglichkeit, über eine digitale Schnittstelle 7 Daten zu empfangen. An diese kann beispielsweise eine digitale Videokamera angeschlossen werden. Eine dritte Möglichkeit besteht darin, einen digitalen Film von einem Wechseldatenträger einzulesen. Dazu ist ein DVD-Laufwerk 11 vorgesehen. Dieses ist vorzugsweise so ausgestaltet, dass Daten nicht gelesen, sondern auch auf den Wechseldatenträger geschrieben werden können. Weitere Möglichkeiten, Datenquellen anzuschließen, sind aufgrund des flexiblen Aufbaukonzeptes gegeben.

Die Recheneinheit 4 ist mit einer Schnittstelle 12 verbunden, die eine drahtlose Kommunikation mit einer Fernbedienung 2 ermöglicht. Die Funktionen der Datenverarbeitungsvorrichtung 1 sind zumindest teilweise über die Fernbedienung 2 steuerbar. Tasten auf der Fernbedienung können Funktionen der Datenverarbeitungsvorrichtung fest zugeordnet sein oder aber es erfolgt eine Steuerung über ein Menü, das über die Recheneinheit 4 und die Anzeigesteuereinheit 6 auf dem angeschlossenen Anzeigegerät 3 dargestellt wird. Mittels der Tasten der Fernbedienung 2 können Menüs geöffnet, innerhalb des Menüs navigiert und Befehle oder Einstellungen ausgewählt werden.

Eine der wichtigsten Funktionen der dargestellten Anordnung ist das Schneiden von digitalen Filmen. Dies erfolgt prinzipiell so, dass bei dem Betrachten des zu schneidenden Films eine erste Schnittmarkierung gesetzt wird, die den Beginn des auszuschneidenden Filmabschnitts kennzeichnet, und beim weiteren Betrachten des Films eine weitere Schnittmarkierung gesetzt wird, die das Ende des auszuschneidenden Filmabschnitts kennzeichnet. Nach dem Setzen der beiden Schnittmarkierungen wird der Filmabschnitt zwischen der ersten und der zweiten Schnittmarkierung gelöscht. Um ein gutes Schnittergebnis zu erzielen, ist es erforderlich, dass die Schnittmarkierungen möglichst präzise gesetzt werden, sodass tatsächlich nur die Teile des Films herausgeschnitten werden, die unerwünscht sind. Andererseits sollen nicht solche Teile des Films mit ausgeschnitten werden, die eigentlich zu erhalten sind.

Zur Bewerkstelligung dieser Aufgabe sind bei bisherigen Schnittvorrichtungen mehrere Tasten vorgesehen, die die Steuerung des Filmsablaufs bewirken. Durch Drücken einer Wiedergabetaste auf der Fernbedienung wird der Film ausgehend von einer aktuellen Position auf dem Anzeigegerät 3 ausgegeben. Zudem sind Tasten für einen schnellen Vor- und Rücklauf vorgesehen. Zum Setzen der ersten und zweiten Schnittmarkierung sind ebenfalls zwei Tasten und vorgesehen. Diese Tasten sind auch bei der Fernbedienung der erfindungsgemäßen Schnittvorrichtung vorgesehen.

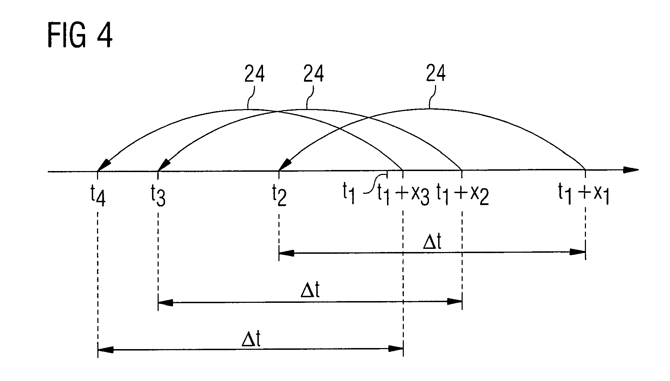

Die folgenden Betrachtungen beziehen sich auf das Setzen der ersten Schnittmarkierung, sie sind aber analog auf das Setzen der zweiten Schnittmarkierung übertragbar. Beim Betrachten des ablaufenden Films erkennt ein Benutzer, dass ab einer bestimmten Stelle t1 ein auszuschneidender Filmabschnitt beginnt, beispielsweise handelt es sich um einen Werbeblock, der in einen Spielfilm eingebettet ist (siehe zu den genannten Zeitpunkten auch das Diagramm von Figur 4). Zwischen dem Erkennen des Beginns des Werbeblocks zum Zeitpunkt t1 und dem Drücken der Taste zum Zeitpunkt t1 + x1, durch die die erste Schnittmarkierung gesetzt wird, vergehen typischerweise mehrere Sekunden. Diese werden dazu benötigt, die Fernbedienung in die Hand zu nehmen, die richtige Taste zu finden und diese zu drücken. Dies führt dazu, dass die Schnittmarkierung zu spät gesetzt wird. Um die Schnittmarkierung an einer besser passenden Stelle zu setzen, muss ein Benutzer den Film zurückspulen, wobei er die entsprechende Taste für den schnellen Rücklauf betätigt. Nachfolgend muss er in den Wiedergabemodus schalten, um wieder zu der Stelle zu gelangen, an der der Werbeblock beginnt. Dieser Vorgang muss gegebenenfalls mehrfach wiederholt werden, bis eine ausreichend exakte Positionierung der ersten Schnittmarkierung erreicht ist.

Das erfindungsgemäße Verfahren zur Vereinfachung des Setzens von Schnittmarkierungen ist in dem Ablaufdiagramm von Figur 2 dargestellt. Ausgehend von einem Wiedergabemodus (Schritt 21) wird überwacht, ob eine Taste zum Setzen einer Schnittmarkierung an der Fernbedienung gedrückt wird (Schritt 22). Solange dies nicht der Fall ist, bleibt der Wiedergabemodus eingeschaltet. Wenn die Taste gedrückt wird, erfolgt automatisch ein Setzen der Schnittmarkierung (Schritt 23). Im nachfolgenden Schritt 24 erfolgt automatisch, ohne dass der Benutzer weitere Tasten betätigen muss, ein Rücksprung um eine vorgegebene Zeitdauer Δt, beispielsweise drei Sekunden. Nachfolgend schaltet sich die Schnittvorrichtung automatisch in den Wiedergabemodus (Schritt 21), sodass der Benutzer überprüfen kann, ob die gesetzte Schnittmarkierung passend ist oder nicht.

Wie oben ausgeführt, wird die Schnittmarkierung in der Regel zu spät gesetzt. Kommt der Benutzer im Wiedergabemodus zum Zeitpunkt t1 wieder an den Beginn des oben beispielhaft genannten Werbeblocks, so rechnet er bereits mit dessen Beginn und hat die Fernbedienung in der Hand und wartet darauf, dass die Taste zum Setzen der Schnittmarkierung gedrückt werden muss. Somit wird er bei Beginn des Werbeblocks schneller reagieren, sodass die Schnittmarkierung zu einem wesentlich besser passenden Zeitpunkt t1 + x2 gesetzt ist. Nachfolgend erfolgt wieder automatisch der Rücksprung um die vorgegebene Zeitdauer Δt (Schritt 24) und das Schalten in den Wiedergabemodus (Schritt 21), sodass der Benutzer die Position der gesetzten Schnittmarkierung überprüfen kann. Dieser Vorgang ist beliebig oft anwendbar und erfasst auch den Fall, in dem die Schnittmarkierung zu früh gesetzt wird.

Dadurch, dass nur eine Taste betätigt werden muss und nachfolgend mehrere Schritte, nämlich das Setzen der Schnittmarkierung 23, das Ausführen des Rücksprungs 24 und das Schalten in den Wiedergabemodus 21, automatisch ausgeführt werden, ist eine wesentlich komfortablere und sicherere Bedienung ermöglicht. Dadurch, dass der Rücksprung um eine vorgegebene Zeitdauer Δt erfolgt, ist die Position beim Schalten in den Wiedergabemodus in unmittelbarer Nähe der Stelle t1, an der die Schnittmarkierung optimalerweise gesetzt werden sollte. Dies ist ein erheblicher Vorteil gegenüber dem manuellen Betätigen verschiedener Tasten, da bei dem schnellen Rücklauf nicht genau kontrolliert werden kann, wie weit die Position, an der in den Wiedergabemodus geschaltet wird, vor der optimalen Position der Schnittmarkierung liegt. Meist ist die Position viel zu weit vorne in dem Film, sodass es verhältnismäßig lange dauert, bis der Benutzer wieder den Beginn des Werbeblocks sieht. Da eine verhältnismäßig lange Zeit vergeht, hat die Aufmerksamkeit des Benutzers bereits wieder nachgelassen, sodass auch beim zweiten Versuch die Schnittmarkierung mit großer Wahrscheinlichkeit zu spät gesetzt wird.

Das gleiche Verfahren zum Setzen einer Schnittmarkierung ist auch auf die zweite Schnittmarkierung anwendbar, die das Ende des auszuschneidenden Filmabschnitts kennzeichnet. Innerhalb eines Filmes können beliebig viele Schnittmarkierungen gesetzt werde, wobei die Vorgehensweise immer die gleiche ist. Die Schnittmarkierung ist auch losgelöst von der Schnittfunktion nur als Merker für spätere Operationen verwendbar.

Vorzugsweise handelt es sich bei den Tasten zum Setzen der ersten und zweiten Schnittmarkierung um unterschiedliche Tasten 13 und 14 auf der Fernbedienung 2. Günstig ist es, diese in unterschiedlichen Farben zu markieren, die Taste für das Setzen der ersten Schnittmarkierung beispielsweise mit Rot und für das Setzen der zweiten Schnittmarkierung mit Grün. Dadurch ist verhindert, dass aus Versehen die falsche Schnittmarkierung gesetzt wird und der falsche Filmabschnitt gelöscht wird.

Weiterhin ist es vorteilhaft, wenn auf dem Anzeigegerät 3 angezeigt wird, ob man sich gerade bei dem betrachteten Filmabschnitt vor der ersten Schnittmarkierung, nach der zweiten Schnittmarkierung oder zwischen den beiden Schnittmarkierungen befindet. Günstig ist es beispielsweise, ein farbiges Symbol einzublenden, das grün ist, wenn man sich vor der ersten oder nach der zweiten Schnittmarkierung befindet, und rot ist, wenn man sich in dem auszuschneidenden Filmabschnitt zwischen den beiden Schnittmarkierungen befindet. Auch denkbar ist es, den auszuschneidenden Filmabschnitt mit einem roten Rahmen oder einer roten Schraffur zu kennzeichnen.

Der Ablauf beim Setzen der Schnittmarkierung ist in Figur 4 in einem Zeitdiagramm nochmals anschaulich dargestellt. Mit t1 ist der Punkt bezeichnet, an dem, um beim vorigen Beispiel zu bleiben, der Werbeblock beginnt und somit optimalerweise die erste Schnittmarkierung gesetzt werden sollte. Durch die verzögerte Reaktion des Benutzers erfolgt das Setzen der Schnittmarkierung tatsächlich aber zum Zeitpunkt t1 + x1. Nach dem Drücken der Taste und dem Setzen der Schnittmarkierung zum Zeitpunkt t1 + x1 erfolgt automatisch ein Rücksprung um die Zeitdauer Δt. Damit gelangt man zum Zeitpunkt t2, der je nach Verzögerung und eingestellter Zeitdauer Δt vor oder nach dem gewünschten Zeitpunkt t1 liegen kann. Zum Zeitpunkt t2 setzt automatisch der Wiedergabemodus ein.

Wenn der Benutzer feststellt, dass die aktuelle Position nach dem beabsichtigten Zeitpunkt t1 liegt, so kann er erneut die Taste drücken, um einen weiteren Rücksprung auszulösen, wobei dieser Zwischenschritt in der Figur 4 nicht explizit dargestellt ist. Damit verbunden ist ein Setzen einer Schnittmarkierung, deren Position jedoch ohne Bedeutung ist, da die aktuelle Position zu weit hinter dem Zeitpunkt t1 liegt. Diese Vorgehensweise ist natürlich beliebig oft wiederholbar.

Nachdem ein Rücksprung zu einer aktuellen Position geführt hat, die vor dem Zeitpunkt t1 liegt, führt der sich automatisch daran anschließende Wiedergabemodus dazu, dass der Benutzer nun zum zweiten Mal den Zeitpunkt t1 zu sehen bekommt. In diesem Beispiel wird davon ausgegangen, dass die Reaktion wieder verzögert erfolgt, diesmal zum Zeitpunkt t1 + x2. Dieser Zeitpunkt ist schon besser als der vorherige Zeitpunkt, aber noch nicht befriedigend nah an der optimalen Position t1. Beim Setzen der verbesserten Schnittmarkierung beim Zeitpunkt t1 + x2 erfolgt wiederum automatisch ein Rücksprung, diesmal zum Zeitpunkt t3. Nachdem der Betrachter wieder den Zeitpunkt t1 sieht, drückt er die Taste zum Zeitpunkt t1 + x3. Zu diesem Zeitpunkt wird die Schnittmarkierung gesetzt und es erfolgt automatisch ein Rücksprung zum Zeitpunkt t4, zu dem wieder in den Wiedergabemodus geschaltet wird. In diesem Ausführungsbeispiel ist der Benutzer mit der gesetzten Markierung zum Zeitpunkt t1 + x3 zufrieden, sodass das Setzen der ersten Schnittmarkierung abgeschlossen ist.

In einer verbesserten Ausführung gemäß dem Ablaufdiagramm von Figur 3 wird der Wiedergabemodus nach Ausführung des Rücksprungs in einer verlangsamten Variante ausgeführt. Dies erleichtert es dem Benutzer, die optimale Position zum Drücken der Taste und zum Setzen der Schnittmarkierung zu finden. Dies ist in dem Ablaufdiagramm dadurch dargestellt, dass nach dem Rücksprung um die Zeitdauer Δt im Schritt 24 ein langsamer Wiedergabemodus eingestellt wird (Schritt 25). Sofern nicht die Taste zum Setzen der Schnittmarkierung gedrückt wird (Schritte 26 und 27), bleibt der langsame Wiedergabemodus für in diesem beispielhaften Fall 5 Sekunden erhalten. Das Drücken der Taste zum Setzen der Schnittmarkierung (Schritt 27) führt zu einem Rücksprung, wobei als nächster Schritt 23 die Schnittmarkierung neu gesetzt wird. Wird während der Zeitdauer von fünf Sekunden (Schritt 26) die Taste zum Setzen der Schnittmarkierung nicht gedrückt, so wird in den normalen Wiedergabemodus geschaltet.

### Bezugszeichenliste

- 1: Datenverarbeitungsvorrichtung
- 2: Fernbedienung
- 3: Anzeigegerät
- 4: Recheneinheit
- 5: Festplattenspeicher
- 6: Anzeigesteuereinrichtung
- 7: Schnittstelle
- 8: HF-Empfangseinheit
- 9: Schnittstelle
- 10: Antenne
- 11: DVD-Laufwerk
- 12: Schnittstelle
- 13: Taste zum Setzen der ersten Schnittmarkierung
- 14: Taste zum Setzen der zweiten Schnittmarkierung
- 15: Schnittstelle
- 21..27: Verfahrensschritte
- t1..t4: Zeitpunkte
- Δt: vorgegebene Zeitdauer

## Patentansprüche

1. Verfahren zum Schneiden eines digitalen Films unter Verwendung einer elektronischen Datenverarbeitungsvorrichtung mit den Schritten:
- Setzen einer ersten Schnittmarkierung,
- Setzen einer zweiten Schnittmarkierung und
- Löschen eines Filmabschnitts zwischen der ersten und der zweiten Schnittmarkierung,
**dadurch gekennzeichnet, dass** ausgehend von einem Wiedergabemodus (21) und ausgelöst durch ein erstes Betätigen einer Taste (13, 14) die folgenden Schritten automatisch ausgeführt werden:
a) Setzen einer Schnittmarkierung (23),
b) Ausführen eines Rücksprungs (24) und
c) Fortsetzen des Wiedergabemodus (21) an der durch den Rücksprung erreichten Stelle des Films.

2. Verfahren nach Anspruch 1,
**dadurch gekennzeichnet, dass** ausgehend von dem Wiedergabemodus nach ausgeführtem Rücksprung und ausgelöst durch ein weiteres Betätigen der Taste die folgenden Schritten automatisch ausgeführt werden:
- Löschen der bisherigen Schnittmarkierung,
- Schritte a), b) und c) nach Anspruch 1.

3. Verfahren nach Anspruch 1 oder 2,
**dadurch gekennzeichnet, dass** der Wiedergabemodus nach dem Rücksprung in einer verlangsamten Variante (25) ausgeführt wird.

4. Verfahren nach Anspruch 3,
**dadurch gekennzeichnet, dass** nach einer vorbestimmten Zeit automatisch von der verlangsamten Wiedergabevariante (25) wieder in die normale Wiedergabevariante (21) geschaltet wird.

5. Verfahren nach einem der Ansprüche 1 bis 4,
**dadurch gekennzeichnet, dass** die Schritte a), b und c) beim Setzen der ersten und zweiten Schnittmarkierung ausgeführt werden, wobei das Setzen der ersten Schnittmarkierung durch die Betätigung einer ersten Taste (13) und das Setzen der zweiten Schnittmarkierung durch die Betätigung einer zweiten Taste (14) ausgelöst wird.

6. Verfahren nach Anspruch 5,
**dadurch gekennzeichnet, dass** die erste und zweite Taste (13, 14) an einer Fernbedienung (2) der elektronischen Schnittvorrichtung betätigt wird.

7. Verfahren nach einem der Ansprüche 1 bis 6,
**dadurch gekennzeichnet, dass** auf einem Anzeigegerät (3) angezeigt wird, ob der aktuell laufende Filmabschnitt vor der ersten, nach der zweiten oder zwischen den beiden Schnittmarkierung liegt.

8. Schnittvorrichtung zum Schneiden eines digitalen Films mit
- einer Datenverarbeitungsvorrichtung (1) und
- einer Fernbedienung (2),
**dadurch gekennzeichnet, dass** die Datenverarbeitungsvorrichtung (1) oder die Fernbedienung (2) zur Durchführung des Verfahrens nach einem der Ansprüche 1 bis 7 eingerichtet ist und die Taste (13, 14) eine Taste der Fernbedienung (2) ist.
